**Europäisches Patentamt**

(19) **European Patent Office**

**Office européen des brevets**

(11) Veröffentlichungsnummer: **0 144 857**
**B1**

(12) # EUROPÄISCHE PATENTSCHRIFT

(45) Veröffentlichungstag der Patentschrift:
22.04.87

(51) Int. Cl.⁴: **H 01 G 4/30**

(21) Anmeldenummer: **84114050.2**

(22) Anmeldetag: **20.11.84**

(54) **Elektrischer Kondensator aus einem verfestigten Stapel von aneinander geschichteten metallisierten Dielektrikumslagen und Verfahren zu seiner Herstellung.**

(30) Priorität: **23.11.83 DE 3342329**

(43) Veröffentlichungstag der Anmeldung:
**19.06.85 Patentblatt 85/25**

(45) Bekanntmachung des Hinweises auf die Patenterteilung:
**22.04.87 Patentblatt 87/17**

(84) Benannte Vertragsstaaten:
**AT BE CH DE FR GB IT LI NL SE**

(56) Entgegenhaltungen:
**US - A - 3 444 436**
**US - A - 3 651 548**

**IBM TECHNICAL DISCLOSURE BULLETIN, Band 25, Nr. 10, März 1983, Seiten 5366-67, NEW YORK (US), N.G. AAKALU: "High capacitance, highly reliable, multilayer capacitor chips"**

(73) Patentinhaber: **Siemens Aktiengesellschaft Berlin und München, Wittelsbacherplatz 2, D-8000 München 2 (DE)**

(72) Erfinder: **Behn, Reinhard, Dipl.-Phys., Frasdorferstrasse 6d, D-8000 München 90 (DE)**

**Beschreibung**

Die Erfindung betrifft einen elektrischen Kondensator aus einem verfestigten Stapel von mit je einer Metallschicht als Belegung versehenen, aneinandergeschichteten Dielektrikumslagen, bei dem die Belegungen von Lage zu Lage abwechselnd bis zu den Enden von zwei Vorsprüngen reichen, die durch einen Einschnitt entstanden sind, der in Richtung der Dicke des Stapels und etwa in der Mitte einer Seite desselben verläuft, bei dem ferner die von den Enden der Vorsprünge im verfestigten Stapel gebildeten Flächen mit zur Kontaktierung dienenden Metallschichten versehen sind, die die gegenpoligen Belegungen miteinander verbinden.

Die Erfindung betrifft ferner ein Verfahren zur Herstellung eines solchen elektrischen Kondensators, bei dem einseitig metallisierte Bänder aus Kunststoff als Dielektrikumslagen, insbesondere mit randseitigem Wellenschnitt, auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils einen Mutterkondensator bildende Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen und danach im Bereich der Zwischenlagen und in dazu senkrechter Richtung geteilt wird.

In der Zeitschrift «IBM Technical Disclosure Bulletin», Vol. 25, No. 10, March 1983, Seiten 5366 und 5367 ist ein Vielschichtkondensator mit Keramik als Dielektrikum beschrieben, der die Merkmale des oben angegebenen Kondensators aufweist. Die Herstellung derartiger keramischer Vielschicht-Chip-Kondensatoren ist beispielsweise in der US-PS 3 740 624 beschrieben und besteht darin, dass auf Folien aus pulverförmigem Keramikmaterial und Kunststoff als Bindemittel in bestimmter Anordnung Metallflecke aufgebracht werden, dass diese Folien danach übereinander gestapelt werden, so dass die Metallflecke von Schicht zu Schicht gegeneinander versetzt sind und im fertigen Kondensator an unterschiedlichen Seiten enden, wonach aus einem gepressten grösseren Stapel aus solchen Folien die einzelnen Kondensatoren ausgestanzt und dann dem keramischen Sinterbrand unterworfen werden. Das Einbringen eines Einschnittes bei solchen keramischen Vielschicht-Kondensatoren bereitet erhebliche technische Schwierigkeiten, denn werden diese Einschnitte bereits beim Ausstanzen der einzelnen Kondensatoren aus dem Folienstapel erzeugt, dann kann es bei der späteren Sinterung zu Unregelmässigkeiten im Gefüge kommen, oder werden diese Einschnitte an den fertig gesinterten Keramikstapeln hergestellt, dann bedeutet dies einen erheblichen Aufwand an Präzisionsinstrumenten, weil insbesondere sehr kleine Kondensatoren dann schlecht zu handhaben sind, zumal auch eine erhebliche Ausfallrate durch Bruch zu befürchten ist.

Gleichwohl sind die bekannten Kondensatoren von ihrem Aufbau her nicht uninteressant, weil durch die spezielle Anordnung der einzelnen Belegungen eine Stromführung resultiert, bei der die Ströme auf Gegenbelegungen sich gegenseitig kompensieren, so dass der Kondensator insgesamt einen niederinduktiven Aufbau hat.

Niederinduktive keramische Chip-Kondensatoren sind in der Zeitschrift «IBM Technical Disclosure Bulletin», Vol. 24, No. 1B, June 1981, Seiten 437 bis 440 beschrieben. Bei diesen Kondensatoren werden die Stromzuführungen zu den gegenpoligen Belegungen ebenfalls nur von einer Seite bewirkt. Dies ist bei keramischen Chip-Kondensatoren möglich, weil die Dicke der keramischen Dielektrikumslagen grösser als 20 µm ist und die Dicke der Metallbelegungen wenigstens 1 µm beträgt. Dennoch ist das Verfahren in grosstechnischem Massstab nicht oder nur mit erheblichem technischen Aufwand durchführbar.

Andererseits sind Stapel- oder Schichtkondensatoren mit Kunststoffolien als Dielektrikum bekannt, die nach dem eingangs angegebenen Verfahren hergestellt werden (vgl. DE-PS 1 764 541 entsprechend US-PSen 3 670 378 und 3 728 765). Es handelt sich dabei um Massenprodukte mit täglichen Fertigungszahlen von über 1 Million Stück.

Das in den genannten Patentschriften beschriebene Trommelwickelverfahren (Radwickelverfahren) ist schematisch im SIEMENS-Prospekt «Ideal für Leiterplatten: MK-Schichtkondensatoren» NR. B 21/1210, WS 107520, d.h. Ausgabe 1975, auf den Seiten 6 und 7 dargestellt. Die dabei resultierenden Kondensatoren sind auf den Seiten 4 und 5 gezeigt. Dabei entspricht das rechte Bild auf Seite 4 praktisch den Fig. 5 und 6 der DE-PS 1 764 541. Die englische Ausgabe dieses SIEMENS-Prospektes lautet: «Ideally Suitable for PC Board Mounting: Metallized Plastic Layer Capacitors», No B 21/1210.101, WS 3766.

Diese Kondensatoren sind regenerierfähig, d.h. die metallischen Belegungen sind so dünn, dass sie bei einem Durchschlag durch die dabei frei werdende Energie um die Durchschlagstelle herum verdampfen und dabei einen Isolationshof bilden, wie dies in dem angegebenen Prospekt auf Seite 3 schematisch dargestellt ist. Die Regenerierfähigkeit ist im übrigen in der DE-PS 832 640 (entsprechend GB-PS 686 293) beschrieben.

Das Herstellungsverfahren für Schichtkondensatoren ist auch in dem SIEMENS-Prospekt «MK-Schichtkondensatoren nun auch mit Polyester-Dielektrikum» Nr. B 1687, WS 37725, d.h. Ausgabejahr 1977, auf Seite 5 schematisch dargestellt. Die englische Ausgabe dieses SIEMENS-Prospektes «Metallized Plastic Layer Capacitors now also with Polyester Dielectric» trägt die Nummer B 1687.101, WS 37712, d.h. Ausgabejahr 1977.

Für den Einsatz in gedruckten Schaltungen ist es erfoderlich, dass die Stromzuführungselemente dieser Kondensatoren im Rastermass, d.h. in einem ganzzahligen Vielfachen von 2,5 mm, angeordnet sind.

Bei den hier in Rede stehenden Schichtkondensatoren mit Kunststoffolien als Dielektrikum wird der Abstand drahtförmiger Stromzuführungselemente durch die Breite der auf die Trommel aufzuwickelnden metallisierten Kunststoffbänder zusammen mit den an gegenüberliegenden Seiten angeordneten Metallschichten (Stirnkontaktschichten) bestimmt, wie dies beispielsweise in der GB-PS 1 224 124 (entsprechend US-PSen 3 710 211 und 3 693 244) beschrieben ist. Aus Gründen, die später und im Zusammenhang mit der Erläuterung der Figuren noch näher dargelegt werden, war es bisher nur möglich, Schichtkondensatoren mit einem geringsten Rastermass von 5 mm zu erzielen.

Bei der Herstellung der hier in Rede stehenden Schichtkondensatoren mit Kunststoffolien als Dielektrikum werden metallisierte Kunststoffbänder, die alternierend jeweils an gegenüberliegenden Rändern mit metallfreien Streifen versehen sind, auf die Trommel gewickelt. Dabei entsteht ein dem Radius des Wickelrades (meist 25 bis 50 cm) entsprechend gekrümmter Mutterkondensator, bzw. bei mehreren auf dem Rad aufgewickelten Mutterkondensatoren ein Ausgangskondensator, der an seinen Stirnflächen durch Metallspritzen (Schoop-Verfahren z.B. gemäss US-PS 1 128 058) mit Metallschichten versehen wird. Nach dem Aufteilen des Ausgangskondensators in Mutterkondensatoren, werden von diesen die einzelnen Kondensatoren abgesägt. Damit an der Sägefläche ein grösserer Isolationsabstand zwischen den gegenpoligen Metallbelegungen resultiert als es der Dicke der Dielektrikumslagen entspricht (15 µm bis runter zu 1 µm), sind verschiedene Massnahmen bekannt. So wird in der DE-PS 1 764 548 (entspr. US-PS 3 614 561) hierfür die Verwendung gereckter Kunststoffolien als Dielektrikumsfolien und das Sägen mit gerade so grosser örtlicher Erhitzung der Kunststoffolien ohne Anwendung einer Ausbrennspannung vorgeschlagen, dass dadurch ein kleiner Randstreifen der Kunststoffolien entreckt wird.

In der DE-PS 1 764 549 (entsprechend US-PS 3 590 347) wird zur Erzielung ausreichender Isolation im Schnittkantenbereich vorgeschlagen, dass mindestens ein Teil der Dielektrikumsfolien vor der Wärmebehandlung wenigstens im Bereich der Trennflächen derart mit Lösungsmittel versehen und weiterbehandelt wird, dass der Lösungsmittelanteil dort bei der Wärmebehandlung etwa 0,25% beträgt, wodurch in den Randbereichen ein Zerfall des Zusammenhangs der Metallbelegung erreicht wird.

In der DE-PS 2 526 130 (entsprechend US-PS 4 041 587) wird vorgeschlagen, das Sägeblatt während des Sägevorganges mit einem isolierenden Gleitmittel dadurch zu beschichten, dass dem zu trennenden Mutterkondensator eine durch die Wärmeentwicklung beim Sägen schmelzende Polyolefinfolie angeordnet wird, das diese zusammen mit dem Mutterkondensator zersägt wird und dass das Sägeblatt im Bereich seines Eingriffs zunächst die Polyolefinfolien und erst dann den kapazitiv wirksamen Bereich des Kondensators durchdringt. Auch hierdurch wird eine erhöhte Isolation im Schnittkantenbereich erzielt.

Zur Erhöhung der Kontaktierung zwischen den an den Stirnseiten angebrachten Metallschichten und den gleichpoligen Belegungen an einer jeden Seite wird in der DE-PS 2 416 566 ein mit dem Schoop-Verfahren stirnkontaktierter elektrischer Kondensator, insbesondere Stapel- oder Schichtkondensator beschrieben, welcher metallisierte Kondensatorfolien aus Isolierstoffschichten und Metallisierungen enthält, deren stirnkontaktierte Kanten einen welligen Verlauf zeigen, wobei die Gesamtlänge der Kanten nur einige wenige Längenwellen der Welligkeit beträgt und wobei die Frequenz der Welligkeit der Kanten benachbarter Folienlagen unterschiedlich ist.

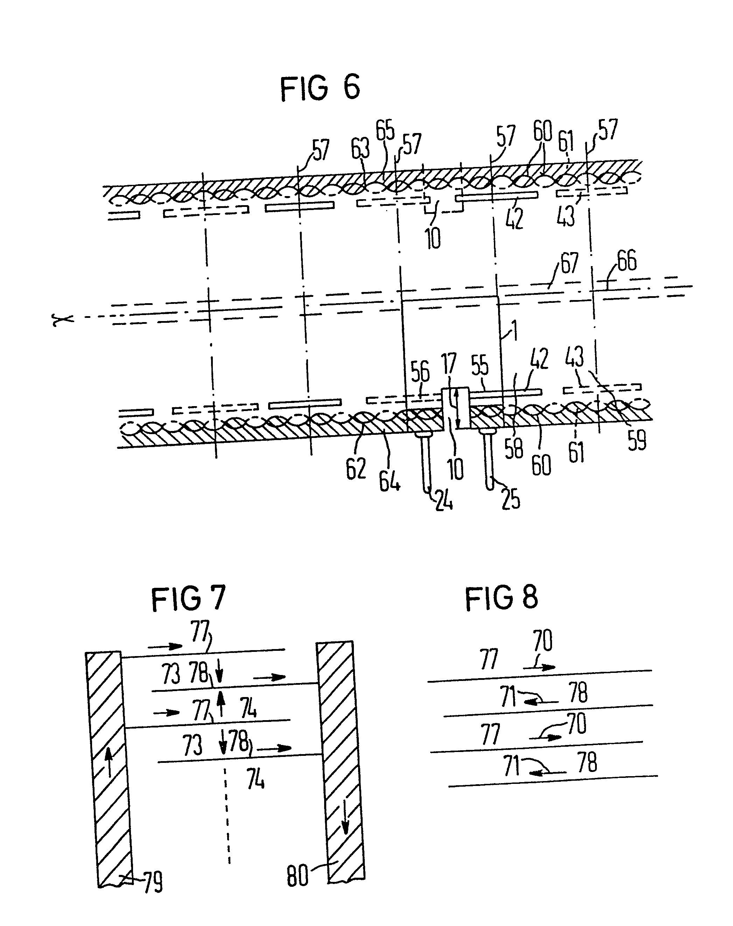

Der bisher geschilderte Stand der Technik bezüglich Schichtkondensatoren mit Kunststoffdielektrikum zeigt, dass stets Kondensatoren resultieren, in denen der Stromverlauf von einer Stirnkontaktierung über die Metallbelegungen durch das Dielektrikum hindurch (Verschiebungsströme) auf den Gegenbelegungen der gleichen Richtung zur anderen Stirnkontaktschicht verläuft, wie dies in Fig. 7 gezeigt ist. Diese Ströme sind nicht kompensiert und erzeugen ein Magnetfeld.

Ein solcher Stromverlauf gilt im Prinzip auch für sog. kapazitive Netzwerke, wie sie in der DE-PS 1 764 861 (entsprechend GB-PS 1 220 567) beschrieben sind. Diese Kondensatoren werden nach dem Verfahren zur Herstellung von Schichtkondensatoren in der oben beschriebenen Weise hergestellt und danach mit sehr tiefen Einschnitten versehen, so dass innere Reihenschaltungen resultieren.

Die einfachste Form eines solchen kapazitiven Netzwerkes mit einer inneren Reihenschaltung ist in der DE-PS 1 940 036 (entsprechend GB-PS 1 289 206) in den Figuren 2 und 3 dargestellt. Diese Figuren zeigen zwei Dielektrikumsfolien aus einem durch den Einschnitt praktisch U-förmig gebildeten Kondensator. Die eine obere Dielektrikumslage weist eine Metallbelegung auf, die an keiner Seite der U-Form bis an den Rand heranreicht und selbst wiederum U-förmig ist.

Die andere, untere Dielektrikumslage weist zwei Metallbelegungen auf, die sich nur auf den Schenkeln der U-Form befinden und bis zu den Enden der beiden U-Schenkeln reichen. Auch eine solche Anordnung der Belegungen führt zu einem Stromverlauf, der nicht kompensiert ist.

Abgesehen davon sind diese Kondensatoren primär für den Einsatz in gedruckten Schaltungen nicht vorgesehen.

Auf dem Gebiet der modernen Elektronik wird durch die immer höhere Arbeitsfrequenz ein zunehmend grösserer Aufwand für den Störschutz und für die Stabilisierung der Versorgungsspannungen benötigt. Störschutzkondensatoren mit Elektroden aus Metallfolien und bifilarer Wicklung sind bekannt. Sie sind jedoch für die erforderlichen Anwendungszwecke zu gross und auch zu teuer. Neuerdings wurden, wie oben durch die beiden Literaturstellen «IBM Technical Disclosure Bulletin» erläutert, sehr kleine keramische Vielschichtkondensatoren ebenfalls mit bifilarem Aufbau bekannt, die in ihrem Kapazitätsbereich und in ihren Abmessungen den Anforderungen der modernen Elektronik angepasst sind. Das Herstellungsverfahren für solche Kondensatoren ist jedoch, wie erläutert, kompliziert und daher für die Massenfertigung nicht geeignet.

Der vorliegenden Erfindung liegt die Aufgabe zugrunde einen Schichtkondensator mit Kunststoff als Dielektrikum zu schaffen, der durch die Anordnung der Belegungen induktionsarm ist, in einfacher Weise als Massenprodukt hergestellt werden kann, dessen erzielbare Rastermasse nicht mehr von der Breite der aufzuwickelnden Bänder abhängt und mit dem somit auch ein Rastermass von 2,5 mm erzielt werden kann.

Es ist ferner Aufgabe der Erfindung, ein Verfahren zur Herstellung eines eingangs angegebenen Kondensators anzugeben, durch das die Kondensatoren in sehr grossen Stückzahlen und ohne hohe zusätzliche Investitionskosten hergestellt werden können.

Zur Lösung dieser Aufgabe ist der elektrische Kondensator der eingangs angegebenen Art erfindungsgemäss durch folgende Merkmale gekennzeichnet:

a) die Dielektrikumslagen bestehen aus Kunststoffolien,

b) die Belegungen bestehen aus regenerierfähig dünnen Schichten aus Ventilmetall und bedecken je eine Fläche der Dielektrikumslagen praktisch bis zu den Rändern an den Längsseiten sowie bis zu beiden Enden der Vorsprünge und gegebenenfalls bis zum Rand der oberen Schmalseite des Stapels, die der den Einschnitt enthaltenen Schmalseite gegenüberliegt,

c) alternierend von Dielektrikumslage zu Dielektrikumslage sind die Vorsprünge mit metallfreien Isolierstreifen versehen, wobei die Tiefe des Einschnitts entweder grösser ist als die Breite des Restmetallstreifens oder vorzugsweise mit den inneren Rändern der Isolierstreifen zusammenfällt oder über diese Ränder hinaus in den Stapel hineinreicht,

d) die die gegenpoligen Belegungen auf den Flächen miteinander verbindenden Metallschichten sind durch Metallspritzen hergestellt.

Vorzugsweise werden als Dielektrikumslagen Kunststoffolien verwendet, die 1 bis 15 µm dick sind.

Ferner ist es vorteilhaft, wenn die Dielektrikumslagen im Bereich der oberen Schmalseite des Stapels metallfreie Streifen aufweisen, weil dann unter Umständen die Erzeugung der Randisolation an dieser Schmalseite erleichtert wird.

An den Metallschichten können Stromzuführungsdrähte befestigt sein, die sich in Richtung der Längsachse des Stapels erstrecken. Der Abstand dieser Stromzuführungsdrähte bestimmt das Rastermass, so dass deutlich wird, dass dieses Rastermass nun nicht mehr von der Breite des auszuwickelnden Bandes abhängig ist.

Für den Einbau des Kondensators in Chipbauweise, nämlich durch Auflegen des Bauelementes auf die Kontaktflächen der gedruckten Schaltung, sind an den Metallschichten Stromzuführungen aus lötfähigem Metall befestigt, die gegebenenfalls kappenförmig ausgebildet sind und dann die aus den Vorsprüngen im verfestigten Stapel gebildeten Füsse umschliessen.

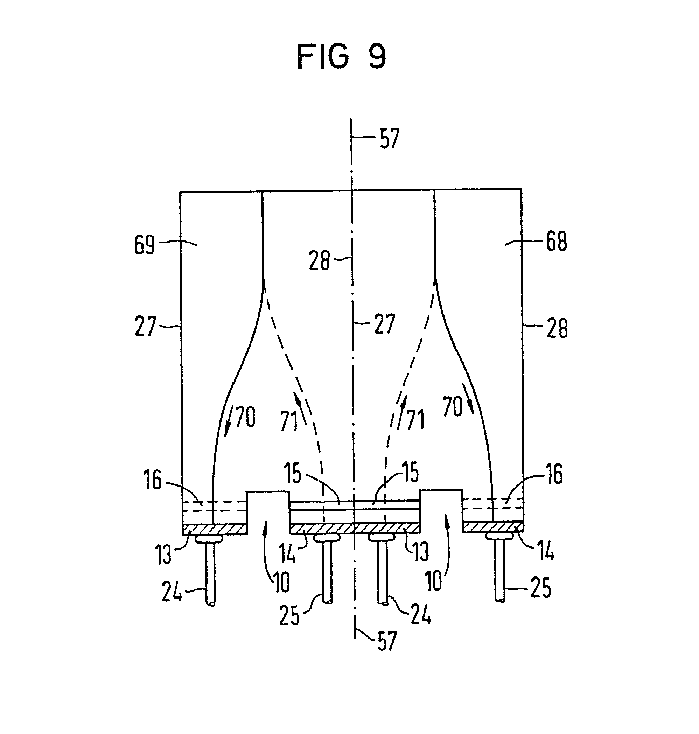

Vorzugswseise besteht der eleketrische Kondensator aus zwei Einzelkondensatoren, wobei eine Längsseite des ersten Kondensators mit der anderen Längsseite des zweiten Kondensators zusammenhängt, indem bei der Herstellung eine Trennung dort nicht erfolgt ist. Ein solcher Kondensator stellt einen steckbaren, abmessungsgünstigen, sog. vorbeigeschliffenen Kondensator dar. Dies wird bei der Beschreibung der Fig. 9 erläutert.

Zur Lösung der der Erfindung zugrundeliegenden ergänzenden Aufgabe ist das eingangs angegebene Verfahren zur Herstellung eines solchen Kondensators erfindungsgemäss gekennzeichnet durch die Verfahrensschritte

a) es werden metallisierte Bänder auf die Trommel gewickelt, die je an einem Rand gegebenenfalls durchgehende metallfreie Streifen aufweisen, während in den Bereichen der gegenüberliegenden Ränder und in Abständen hierzu in Wickelrichtung intermittierende metallfreie Isolierstreifen vor oder bei dem Aufwickeln derart erzeugt werden, dass die Isolierstreifen beim Aufwickeln auf die Trommel in einer Ebene senkrecht zur Wickelachse liegen und sowohl die Enden als auch die Anfänge der Isolierstreifen bis in den Bereich des späteren Einschnittes hineinragen oder diesen Bereich geringfügig überschreiten,

b) die Bänder werden beim Aufwickeln auf die Trommel so geführt, dass die Mitten der Isolierstreifen des oberen Bandes symmetrisch über die Mitten der Zwischenräume zwischen den Isolierstreifen des unteren Bandes gelangen,

c) nach dem Aufwickeln und Verfestigen der Ausgangskondensatoren bzw. Mutterkondensatoren wird noch auf der Trommel zumindest die aus den Rändern gebildete Stirnfläche durch Metallspritzen mit einer Metallschicht versehen,

d) nach dem Auftrennen in einzelne Mutterkondensatoren werden senkrecht zur Wickelrichtung in der Mitte zwischen je zwei Schneidlinien Einschnitte erzeugt, durch deren Breite und Tiefe die beiden Vorsprünge entstehen,

e) Abtrennen der einzelnen Kondensatoren, gegebenenfalls nach Befestigen von Stromzuführungen, durch Sägen längs von Schneidlinien, die durch die Mitten der Isolierstreifen gehen,

f) Fertigstellung der Kondensatoren durch Anbringen von kappenförmigen Stromzuführungen oder von anderen Stromzuführungen, sofern diese nicht schon im Verfahrensschritt e) befestigt wurden.

Eine Variante dieses Verfahrens ist erfindungsgemäss dadurch gekennzeichnet, dass beim Verfahrensschritt a) die auf die Trommel aufzuwickelnden Bänder an beiden Rändern mit den intermittierenden metallfreien Isolierstreifen versehen werden, dass im Verfahrensschritt c) beide aus den Rändern gebildeten Stirnflächen mit Metallschichten durch Metallspritzen versehen werden, dass im Verfahrensschritt d) die Einschnitte von beiden Seiten des Mutterkondensators erzeugt werden und dass im Verfahrensschritt e) die Abtrennung der einzelnen Kondensatoren sowohl längs der genannten Schneidlinien als auch längs einer Schneidlinie erfolgt, die parallel zu den Rändern in der Mitte des Mutterkondensators liegt.

Vorzugsweise sind die bei dieser Verfahrensvariante aufzuwickelnden metallisierten Bänder in ihrer Mitte mit durchgehenden metallfreien Streifen versehen.

Die Vorteile des elektrischen Kondensators gemäss der Erfindung und des Verfahrens zu seiner Herstellung werden nachfolgend anhand der Figuren näher erläutert.

Es zeigen:

Fig. 1 einen Kondensator nach der Erfindung mit Stromzuführungsdrähten,

Fig. 2 einen Kondensator nach der Erfindung für den Einbau in Chipbauweise,

Fig. 3 einen Ausschnitt aus dem Herstellungsverfahren,

Fig. 4 schematisch einen teilweise zerlegten Kondensator nach der Erfindung,

Fig. 5 schematisch einen teilweise zerlegten Kondensator des Standes der Technik,

Fig. 6 einen Ausschnitt aus der Variante des Herstellungsverfahrens,

Fig. 7 schematisch den Stromdurchgang durch einen zum Stand der Technik gehörenden Kondensator,

Fig. 8 schematisch den für geringe Induktion erforderlichen Stromverlauf und

Fig. 9 einen aus zwei zusammenhängenden Einzelkondensatoren bestehenden Kondensator.

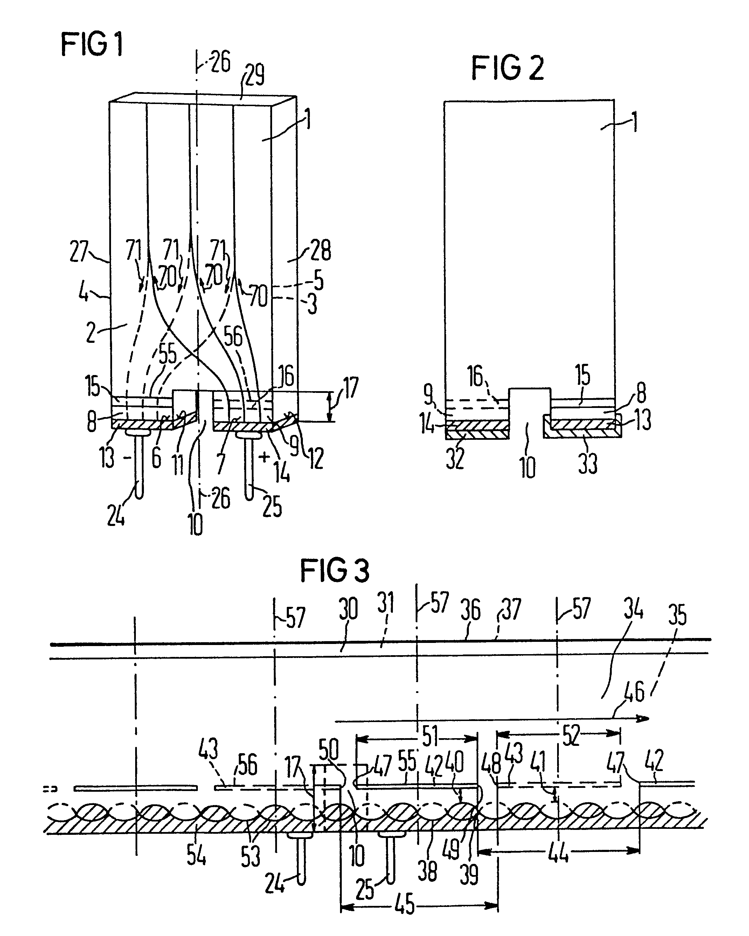

Der elektrische Kondensator gemäss Fig. 1 besteht aus einem verfestigten Stapel aus einer Vielzahl von Dielektrikumslagen 4 und 5, die mit Belegungen 2 und 3 versehen sind. Durch einen Einschnitt 10 in Richtung der Dicke des Stapels 1, d.h. senkrecht zu den die Dielektrikumslagen 4 und 5 weisen dieselben Vorsprünge 8 und 9 auf, deren Enden 6 und 7 im verfestigten Stapel 1 Flächen 11 und 12 bilden. Auf diesen Flächen sind Metallschichten 13 und 14 aufgetragen, die die bis zu den Enden 6 und 7 reichenden Belegungen miteinander verbinden. Die Belegung 2 auf der Dielektrikumslage 4 ist durch einen metallfreien Isolierstreifen 15 nicht mit der Metallschicht 13 verbunden, während die Belegung 3 auf der Dielektrikumslage 5 durch den metallfreien Isolierstreifen 16 mit der Metallschicht 14 nicht verbunden ist. Dies setzt sich alternierend durch den gesamten Stapel 1 hindurch fort.

An den Metallschichten 13 und 14 sind Stromzuführungsdrähte 24 und 25 befestigt, beispielsweise durch Löten oder Schweissen.

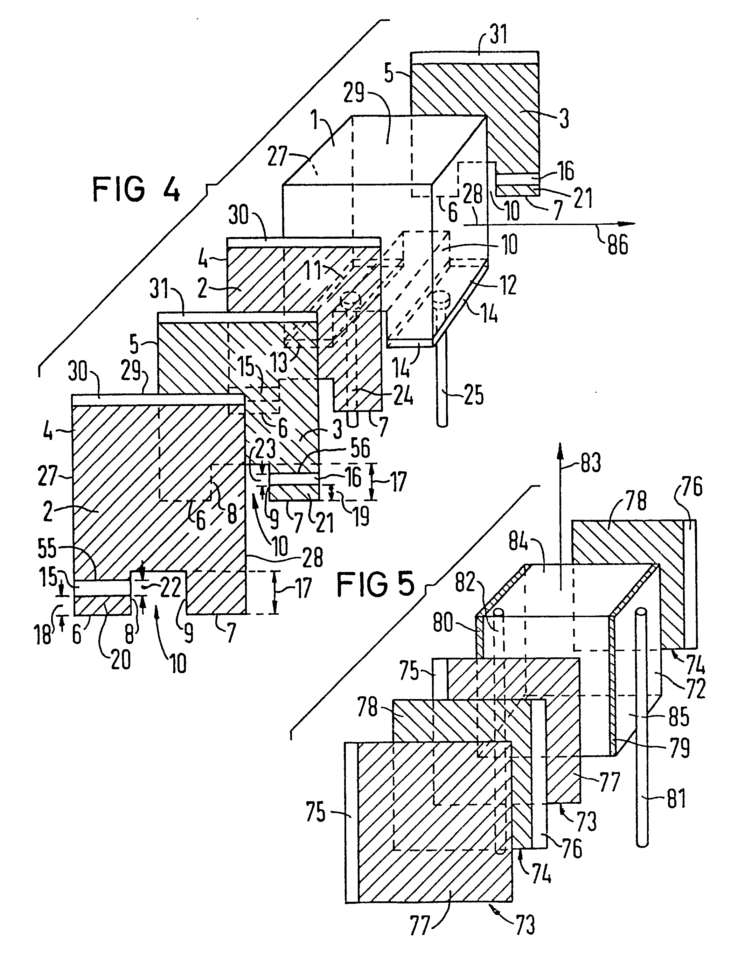

Die Tiefe 17 des Einschnittes 10 in Richtung der Längsachse 26 des Stapels 1 reicht mindestens bis über die Restmetallstreifen 20 und 21 (Fig. 4) oder bis zu den inneren Rändern 55 und 56 der Isolierstreifen 15 und 16. Vorteilhafterweise überragt die Tiefe 17 diese inneren Ränder 55 und 56 der Isolierstreifen 15 und 16.

Die Belegungen 2 und 3 auf den Dielektrikumslagen 4 und 5 reichen bis zu den Längsseiten 27 und 28 und gegebenenfalls auch bis zur Schmalseite 29. Zur Erzielung einer ausreichenden Isolation zwischen den Belegungen 2 und 3 dienen die in den oben erwähnten DE-PSen 1 764 548, 1 764 549 und 2 526 130 erläuterten Massnahmen. Dies gilt auch für die sich im Schnitt 10 ergebenden Flächen, denn auch dort ist eine erhöhte Isolierung erforderlich.

Bei dem Kondensator gemäss der Erfindung ist der bifilare Aufbau weitgehend realisiert, d.h. der Kondensator ist sehr niederinduktiv. Die durch die Pfeile 70 angezeigten Stromwege auf der Belegung 2 werden hinsichtlich ihrer Richtung durch die Pfeile 71 auf der Belegung 3 bezeichneten Stromwege kompensiert. Höchstens in unmittelbarer Nähe des inneren Endes des Einschnittes 10 könnten nicht kompensierte Stromwege auftauchen, dieser Anteil ist aber gegenüber den anderen kompensierten Stromwegen weitestgehend vernachlässigbar.

In Fig. 2 sind für Teile, die denen in Fig. 1 entsprechen, gleiche Bezugszeichen verwendet. Anstelle von Stromzuführungsdrähten 24, 25 ist der Kondensator nach Fig. 2 jeweils an beiden aus den durch den Einschnitt 10 entstandenen Vorsprüngen 8 und 9 gebildeten Füssen etweder mit Stromzuführungen 32 in Form von Metallschichten oder mit Stromzuführungen 33 in Kappenform versehen, wobei die Kappe den Fuss teilweise umschliesst. Beide dieser Ausführungsformen der Stromzuführungen dienen für den Einbau des Kondensators als Chip. Bei Stromzuführungen 32 in Form von Metallschichten steht der Kondensator auf den Kontaktierungsstellen der gedruckten Schaltung und ist daran angelötet, während bei Stromzuführungen 33 in Kappenform der Kondensator auch liegend auf der gedruckten Schaltung eingebaut werden kann.

Vor der Erläuterung des Verfahrens zur Herstellung von Kondensatoren nach der Erfindung anhand der Fig. 3 sollen zunächst die Figuren 4, 5, 7 und 8 erläutert werden.

In Fig. 5 ist ein zum Stand der Technik gehörender Schichtkondensator 72 gezeigt, wobei zur Verdeutlichung des inneren Aufbaues drei vordere Dielektrikumslagen 73 und 74 und die letzte Dielektrikumslage 74 getrennt herausgehoben sind. Es ist selbstverständlich und gehört mit zum Stand der Technik, dass oberhalb der ersten Dielektrikumslage 73 und oberhalb der letzten Dielektrikumslage 74 weitere der Isolierung dienende und kapazitiv nicht wirksame Decklagen vorhanden sind. Gleiches gilt für Kondensatoren nach der vorliegenden Erfindung.

Die Dielektrikumslagen 73 weisen in Fig. 5 links metallfreien Streifen 75 auf, während die Dielektrikumslagen 74 rechts metallfreie Streifen 76 enthalten. Somit enden die Belegungen 77 auf den Dielektrikumslagen 73 rechts und die Belegungen 78 auf den Dielektrikumslagen 74 links in den Stirnflächen des Kondensators 72 und sind dort durch die aufgespritzten Metallschichten 79 und 80 gleichpolig miteinander kontaktiert. An den Metallschichten 79 und 80 sind Stromzuführungsdrähte 81 und 82 angelötet oder angeschweisst. Der Pfeil 83 zeigt die Wickelrichtung an, in der die mit den als Belegungen 77 und 78 versehenen Dielektrikumsbänder auf das Rad bzw. die Trommel bei der Herstellung aufgewickelt wurden. Beim Abtrennen der einzelnen Kondensatoren von den Mutterkondensatoren durch Sägen sind die Schnittflächen 84 und 85 entstanden, deren Isolation nach einem in den oben bereits erwähnten DE-PSen 1 764 548, 1 764 549 und 2 526 130 beschrieben Verfahren erzielt wurde.

Die Stromwege in einem solchen zum Stand der Technik gehörenden Schichtkondensator sind in Fig. 7 erläutert. Die Ströme fliessen von der Metallschicht 79 über die Belegungen 77 durch die hier nicht gezeichneten Dielektrikumslagen 73 (auch 74) als Verschiebungsströme und dann auf den Belegungen 78 in der gleichen Richtung zur Metallschicht 80. Zur Kompensation müssten die Stromwege 70 auf den Belegungen 77 zu den Stromwegen 71 auf den Belegungen 78 gegenläufig verlaufen, wie dies in Fig. 8 schematisch dargestellt ist. Man erkennt zweifelsfrei, dass eine solche Stromwegführung mit den zum Stand der Technik gehörenden Schichtkondensatoren nicht realisiert werden kann.

Beim Kondensator gemäss Fig. 4 sind die zum Stapel 1 gehörenden ersten drei und die letzte Dielektrikumslage abenfalls herausgehoben gezeichnet. Die Belegungen 2 und 3 auf den Dielektrikumslagen 4 und 5 reichen bis zu den beiden Längsseiten 27 und 28 des Stapels 1, sie können auch bis zur Schmalseite 29 reichen, im vorliegenden Ausführungsbeispiel sind jedoch längs der oberen Schmalseite 29 des Stapels 1 metallfreie Streifen 30 und 31 gezeigt.

Durch den Einschnitt 10 sind Vorsprünge 8 und 9 mit Enden 6 und 7 entstanden. Auf den Dielektrikumslagen 4 reicht die Metallbelegung 2 bis zum Ende 7 des Vorsprunges 9, während auf den Dielektrikumslagen 5 die Belegung 3 bis zum Ende des Vorsprunges 8 reicht. Alternierend von Dielektrikumslage 4 zu Dielektrikumslage 5 sind auf den Vorsprüngen 8 bzw. 9 metallfreie Isolierstreifen 15 bzw. 16 angeordnet, so dass Restmetallstreifen 20 bzw. 21 verbleiben. Die Tiefe 17 des Einschnittes 10 sollte mindestens die Breite 18 bzw. 19 der Restmetallstreifen 20 und 21 überragen, vorzugsweise reicht die Tiefe 17 bis zu den inneren Rändern 55 bzw. 56 der metallfreien Isolierstreifen 15 bzw. 16 oder ragen etwas über die inneren Ränder hinaus. Mit anderen Worten ist die Tiefe 17 des Einschnittes 10 grösser als die addierten Breiten 18 bzw. 19 und 22 bzw. 23 der Restmetallstreifen 20 bzw. 21 und der metallfreien Isolierstreifen 15 bzw. 16. Bei der Tiefe des Einschnittes 10 ist auch die Dicke der Metallschichten 13 und 14 zu beachten, die sich auf den durch die Enden 6 und 7 der Vorsprünge 8 und 9 gebildeten Flächen 11 und 12 befinden.

Die Wickelrichtung bei der Herstellung der Kondensatoren gemäss der Erfindung ist mit 86 bezeichnet. Während bei dem zum Stand der Technik gehörenden Kondensator 72 (Fig. 5) die Stromzuführungsdrähte 81 und 82 parallel zur Wickelrichtung 83 angeordnet sind, sind die Stromzuführungsdrähte 24 und 25 bei den Kondensatoren der Erfindung senkrecht zur Wickelrichtung 86 angeordnet.

Das erfindungsgemässe Verfahren zur Herstellung der Kondensatoren der Erfindung wird nachfolgend anhand der Fig. 3 erläutert.

Für die Herstellung der Mutterkondensatoren bzw. des Ausgangskondensators werden ein oberes metallisiertes Kunststoffband 34 und ein unteres metallisiertes Kunststoffband 35, die an ihren Rändern 36 bzw. 37 gegebenenfalls mit metallfreien Isolierstreifen 30 und 31 versehen sein können, in Wickelrichtung 46 auf eine hier nicht gezeigte Trommel gewickelt. Die Bänder 34 und 35 sind an den gegenüberliegdenden Rändern 38 und 39 vorzugsweise mit einem Wellenschnitt versehen. Sinn und Zweck dieses Wellenschnittes ist in der oben bereits erwähnten DE-PS 2 416 566 erläutert. Kurz gesagt dient der Wellenschnitt dazu, die beim Metallaufspritzen erzeugte Metallschicht 54, die an der Stirnfläche 53 auf den Ausgangskondensator aufgetragen wird, flächenhaft mit den später als Belegungen dienenden Metallschichten auf den Kunststoffbändern 34 und 35 zu kontaktieren.

Vor oder spätestens beim Aufwickeln der Bänder 34 und 35 auf die Trommel werden in die auf diesen Bändern befindlichen Metallisierungen in den Bereichen der gegenüberliegenden Ränder 38 und 39 und in Abständen 40 und 41 hierzu in Wickelrichtung 46 intermittierende metallfreie Isolierstreifen 42 bzw. 43 vorzugsweise derart erzeugt, dass die Zwischenräume 44 und 45 zwischen den Enden 47 und 48 und den Anfängen 49 und 50 der Isolierstreifen 42 und 43 grösser sind als die Längen 51 und 52 der Isolierstreifen 42 und 43.

Die Bänder 34 und 35 werden beim Aufwickeln auf die Trommel so geführt, dass die Isolierstreifen 42 des oberen Bandes 34 praktisch in die Mitte über den Zwischenräumen 45 zwischen den Isolierstreifen 43 des unteren Bandes 35 gelangen.

Nach dem Aufwickeln und Verfestigen der Ausgangskondensatoren bzw. Mutterkondensatoren wird noch auf der Trommel zumindest die aus den Rändern 38 und 39 gebildete Stirnfläche 53 durch Metallspritzen mit einer Metallschicht 54 versehen, z.B. nach dem bekannten Schoop-Verfahren (vgl. US-PS 1 128 058).

Nach dem Auftrennen des Ausgangskondensators in einzelne Mutterkondensatoren werden senkrecht zur Wickelrichtung 46 in der Mitte zwischen je zwei Schneidlinien 57 Einschnitte 10 erzeugt, deren Breite vorzugsweise grösser ist als der Abstand zwischen den Enden 47 des oberen Isolierstreifens 42 und dem Anfang 50 des unteren Isolierstreifens 43 und deren Tiefe 17 vorzugsweise bis oder über die inneren Ränder 55 und 56 der Isolierstreifen 42 und 43 reicht. Die Tiefe des Einschnittes 10 kann auch ausgenutzt werden, um die Kapazität des Kondensators auf einen gewünschten eng tolerierten Wert abzugleichen. Allgemein können die Einschnitte 10 auch erst erzeugt werden, nachdem die einzelnen Stapel 1 vom Mutterkondensator abgetrennt worden sind.

Es können nun bereits am Mutterkondensator die Stromzuführungen 24, 25 oder 32 (vgl. Fig. 1 und 2) befestigt werden, es ist aber auch möglich, die einzelnen Kondensatoren zunächst durch Sägen längs von Schneidlinien 57, die durch die Mitten der Isolierstreifen 42 und 43 gehen, abzutrennen und dann die Stromzuführungen anzubringen. Dies empfiehlt sich insbesondere, wenn kappenförmige Stromzuführungen 32 gemäss Fig. 2 vorgesehen sind.

Das Verfahren hat gegenüber dem bekannten Verfahren zur Herstellung von Schichtkondensatoren eine Reihe von Vorteilen.

Bei dem bekannten Verfahren hängt das Rastermass direkt mit der Breite der aufzuwickelnden Bänder zusammen. Für ein Rastermass von 5 mm können wegen der zu berücksichtigende Dicke der Stirnkontaktschichten nur Bänder einer Breite von etwa 4 mm gewickelt werden. Bei der Herstellung eines Ausgangskondensators, bei dem mehrere Mutterkondensatoren übereinander gewickelt werden, wie dies in der oben bereits genannten DE-PS 1 764 541 beschrieben ist, wird die Höhe des Ausgangskondensators in radialer Richtung bei der Verwendung sehr schmaler Bänder begrenzt, weil dann eine gleichmässige Führung nicht mehr gewährleistet ist und die Gefahr besteht, dass der gesamte Ausgangskondensator noch auf der Trommel von dieser durch Umkippen des Stapels eines Mutterkondensators abspringt. Aus diesem Grund können nach dem bekannten Verfahren Schichtkondensatoren für ein Rastermass von 2,5 mm überhaupt nur aus einem oder höchstens zwei Mutterkondensatoren gewickelt werden, wodurch aber das Verfahren in der Massenproduktion extrem unwirtschaftlich wird.

Bei einer Folienbreite von 4 mm für ein Rastermass von 5 mm beträgt die Höhe des Ausgangskondensators in radialer Richtung höchstens 20 bis 30 mm. Bei einer Breite der zu verwickelnden Bänder von 8 bis 9 mm für das Rastermass 10 mm beträgt die Höhe des Ausgangskondensators in radialer Richtung gemessen bereits 50 bis 60 mm. Bei noch grösserer Breite der zu verwickelnden Bänder wird die Höhe des Ausgangskondensators durch andere Parameter bestimmt, beispielsweise durch die Anlagenabmessungen zur Erzeugung der stirnseitigen Metallschichten und ähnliches.

Der Kondensator der vorliegenden Erfindung und das dafür entwickelte Verfahren sind bezüglich des Rastermasses der Stromzuführungselemente von der Breite der aufzuwickelnden Bänder unabhängig. Die Breite des Kondensators zwischen zwei Schnittlinien 57 ist so zu wählen, dass bei dem kleinsten Rastermass von 2,5 mm auf der gedruckten Schaltungsplatte zwei Kondensatoren nebeneinander stehen können, d.h. die resultierende Breite des Kondensators ist etwas geringer als 5 mm, und die Stromzuführungsdrähte 24 und 25 müssen im Rastermass 2,5 mm an den Metallschichten 13 und 14 befestigt sein. Die Höhe des Kondensators in Richtung seiner Längsachse 26 (Fig. 1) kann an sich beliebig sein und ist bestimmend für die Kapazität des Kondensators.

Entsprechend Überlegungen hinsichtlich Breite und Höhe und Anbringung der Stromzuführungsdrähte gelten auch für Kondensatoren mit Rastermassen über 2,5 mm.

Neben dem Vorteil der besonders einfachen Herstellung, die ohne grosse Investitionskosten an sich mit vorhandenen Vorrichtungen durchgeführt werden kann, bestehen somit die weiteren Vorteile der freiwählbaren Breite der zu verwickelnden Bänder, der Erzielung des geringsten Rastermasses von 2,5 mm und der äusserst geringen Induktivität der Kondensatoren. Ferner können die für die bekannten Schichtkondensatoren notwendigen Isolierstreifen zur Erzeugung der metallfreien Streifen 75 und 76 (Fig. 5) entfallen, wodurch das Auftrennen der zunächst breiten metallisierten Ausgangsfolien in einzelne schmale Bänder vereinfacht wird.

Eine besonders einfache Variante des Herstellungsverfahrens ist in Fig. 6 gezeigt und in den Patentansprüchen 8 und 9 enthalten.

Bei diesem Verfahren werden ein oberes metallisiertes Band 58 mit Wellenschnitten an beiden Rändern 60 und ein unteres metallisiertes Band 59, ebenfalls mit Wellenschnitten an beiden Rändern 61, auf die hier wie auch bei Fig. 3 nicht gezeigte Trommel aufgewickelt. Bei oder kurz vor dem Aufwickeln werden die intermittierenden metallfreien Streifen 42 auf dem oberen Band 58 und die metallfreien Streifen 43 auf dem unteren Band 59 erzeugt. Für die Abstände dieser metallfreien Streifen von den Rändern und voneinander und für die Führung dieser Bänder beim Aufwickeln auf die Trommel gelten die gleichen Massgaben wie bei dem anhand der Fig. 3 beschriebenen Verfahren. Nach dem Fertigstellen der Ausgangskondensatoren werden auf den durch die Ränder 60 und 61 gebildeten Stirnflächen 62 und 63 Metallschichten 64 und 65 aufgespritzt (Schoop-Verfahren).

Da die Breite der zu verwickelnden Bänder 58 und 59 so gewählt wurde, dass sie der Summe der Höhen zweier Kondensatoren entspricht, wird vor oder nach dem Erzeugen der Einschnitte 10 der Mutterkondensator sowohl längs der Schneidlinien 57 als auch der mittleren Schneidlinie 66 aufgetrennt.

Gegebenenfalls befindet sich in der Mitte der Bänder 58 und 59 je ein metallfreier Streifen 67, der im fertigen Kondensator die metallfreien Streifen 30 und 31 (Fig. 4) ergibt.

Man erkennt, dass dieses Verfahren besonders rationell durchgeführt werden kann und somit hoch wirtschaftlich ist, weil breitere Folien verwendet werden können, so dass die Ausgangskondensatoren höher aufgewickelt werden können. Dieser Vorteil kommt zu den beim Verfahren gemäss Fig. 4 geschilderten Vorteilen noch hinzu.

Fig. 9 zeigt einen sogenannten vorbeigeschliffen Kondensator, der steckbar ist und besonders günstige Abmessungen aufweist. Ein solcher Kondensator ist für Entstörzwecke besonders geeignet.

Er besteht aus zwei Einzelkondensatoren 68 und 69, wobei die eine Schmalseite 27 des Kondensators 68 mit der anderen Schmalseite 28 des Kondensators 69 zusammenhängt, weil bei der Herstellung eine Auftrennung längs der Trennlinie 57 nicht erfolgt ist.

Im Betrieb wird die zu entstörende Leitung an die gleichpoligen Stromzuführungsdrähte 24 und 25, das sind die inneren Stromzuführungsdrähte der Kondensatoren 68 und 69, angeschlossen. Störsignale werden über die äusseren Stromzuführungsdrähte 25 und 24 der Kondensatoren 68 und 69 niederinduktiv abgeleitet. Auch dieser Kondensator ist durch entsprechende Isolierstreifen 15 und 16 und zwei Einschnitte 10 niederinduktiv aufgebaut. Betrachtet man die Trennlinie 57 - 57 als Spiegelachse, so ist jede Kondensatorhälfte in Fig. 9 im Prinzip identisch mit dem Aufbau des Kondensators gemäss den Figuren 1 oder 2. Die eingezeichneten Stromlinien 70 und 71 zeigen weitgehende Kompensation der Stromkomponenten.

Die Isolierstreifen 42 und 43 auf den Bändern 34, 35, 58 und 59 können in bekannter Weise durch Anwendung eines Laserstrahles oder durch Einsatz eines Abbrennrades (vgl. DE-OS 2 348 904) hergestellt werden. Damit diese Isolierstreifen die richtige Lage und Länge zueinander und auch in Bezug auf den Aufbau der Mutterkondensatoren bei zunehmendem Radius haben, werden die Laserstrahlimpulse bzw. die Abbrenntakte der Abbrennräder synchron mit der Drehung der Trommel gesteuert.

*Bezugszeichenliste*

1 verfestiger Stapel
2 Belegung auf der Dielektrikumslage 4

3    Belegung auf der Dielektrikumslage 5
4    Dielektrikumslage
5    Dielektrikumslage
6    Ende des Vorsprungs 8
7    Ende des Vorsprungs 9
8    Vorsprung an der Dielektrikumslage 4
9    Vorsprung an der Dielektrikumslage 5
10    Einschnitt im verfestigten Stapel 1
11    Fläche am Ende der Vorsprünge 8 im verfestigten Stapel 1
12    Fläche am Ende der Vorsprünge 9 im verfestigten Stapel 1
13    Metallschicht auf Fläche 11
14    Metallschicht auf Fläche 12
15    metallfreier Isolierstreifen
16    metallfreier Isolierstreifen
17    Tiefe des Einschnittes 10
18    Breite des Restmetallstreifens 20 auf dem Vorsprung 8
19    Breite des Restmetallstreifens 21 auf dem Vorsprung 9
20    Restmetallstreifen
21    Restmetallstreifen
22    Breite des metallfreien Isolierstreifens 15
23    Breite des metallfreien Isolierstreifens 16
24    Stromzuführungsdraht
25    Stromzuführungsdraht
26    Längsachse des Stapels 1
27    Längsseite des Stapels 1
28    Längsseite des Stapels 1
29    obere Schmalseite des Stapels 1
30    metallfreie Streifen
31    metallfreie Streifen
32    Stromzuführung für den Einbau als Chip
33    Stromzuführung in Kappenform für den Einbau als Chip
34    oberes metallisiertes Kunststoffband
35    unteres metallisiertes Kunststoffband
36    Rand des Bandes 34
37    Rand des Bandes 35
38    gegenüberliegender Rand des Bandes 34
39    gegenüberliegender Rand des Bandes 35
40    Abstand zwischen Rand 38 und Isolierstreifen 42
41    Abstand zwischen Rand 39 und Isolierstreifen 43
42    Isolierstreifen auf Band 34
43    Isolierstreifen auf Band 35
44    Zwischenräume zwischen den Isolierstreifen 42
45    Zwischenräume zwischen den Isolierstreifen 43
46    Wickelrichtung
47    Ende der Isolierstreifen 42
48    Ende der Isolierstreifen 43
49    Anfang der Isolierstreifen 42
50    Anfang der isolierstreifen 43
51    Länge der Isolierstreifen 42
52    Länge der isolierstreifen 43
53    Stirnfläche
54    Metallschicht
55    innerer Rand des Isolierstreifens 42
56    innerer Rand des Isolierstreifens 43
57    Schneidlinien
58    oberes metallisiertes Band

59    unteres metallisiertes Band
60    Ränder des Bandes 58
61    Ränder des Bandes 59
62    Stirnfläche
63    Stirnfläche
64    Metallschichten auf der Stirnfläche 62
65    Metallschichten auf der Stirnfläche 63
66    Schneidlinie
67    metallfreie Streifen
68    erster Kondensator
69    zweiter Kondensator
70    Pfeile für die Stromwege auf den Belegungen 2
71    Pfeile für die Stromwege auf den Belegungen 3
72    Schichtkondensatoren (Stand der Technik)
73    Dielektrikumslagen
74    Dielektrikumslagen
75    metallfreie Streifen auf den Dielektrikumslagen 73
76    metallfreie Streifen auf den Dielektrikumslagen 74
77    Belegung auf den Dielektrikumslagen 73
78    Belegung auf den Dielektrikumslagen 74
79    Metallschicht für die Kontaktierung der Belegungen 77
80    Metallschicht für die Kontaktierung der Belegungen 78
81    Stromzuführungsdraht
82    Stromzuführungsdraht
83    Wickelrichtung
84    Schnittfläche
85    Schnittfläche
86    Wickelrichtung

**Patentansprüche**

1. Elektrischer Kondensator aus einem verfestigten Stapel (1) von mit je einer Metallschicht als Belegung (2, 3) versehenen, aneinandergeschichteten Dielektrikumslagen (4, 5), bei dem die Belegungen (2, 3) von Lage zu Lage abwechselnd bis zu den Enden (6, 7) von zwei Vorsprüngen (8, 9) reichen, die durch einen Einschnitt (10) entstanden sind, der in Richtung der Dicke des Stapels (1) und etwa in der Mitte einer Seite desselben verläuft, bei dem ferner die von den Enden (6, 7) der Vorsprünge (8, 9) im verfestigten Stapel (1) gebildeten Flächen (11, 12) mit zur Kontaktierung dienenden Metallschichten (13, 14) versehen sind, die die gegenpoligen Belegungen (2, 3) miteinander verbinden, gekennzeichnet durch folgende Merkmale:

a) die Dielektrikumslagen (4, 5) bestehen aus Kunststoffolien,

b) die Belegungen (2, 3) bestehen aus regenerierfähig dünnen Schichten aus Ventilmetall und bedecken je eine Fläche der Dielektrikumslagen (4, 5) praktisch bis zu den Rändern an den Längsseiten (27, 28) sowie bis zu beiden Enden (6, 7) der Vorsprünge (8, 9) und gegebenenfalls bis zum Rand der oberen Schmalseite (29) des Stapels (1), die der den Einschnitt (10) enthaltenen Schmalseite gegenüberliegt,

c) alternierend von Dielektrikumslage (4) zu Dielektrikumslage (5) sind die Vorsprünge (8, 9) mit metallfreien Isolierstreifen (15 bzw. 16) versehen, wobei die Tiefe (17) des Einschnittes (10) entweder grösser ist als die Breite (18 bzw. 19) des Restmetallstreifens (20 bzw. 21) oder vorzugsweise mit den inneren Rändern (55, 56) der Isolierstreifen (15, 16) zusammenfällt oder über diese Ränder (55, 56) hinaus in den Stapel (1) hineinreicht,

d) die die gegenpoligen Belegungen (2, 3) auf den Flächen (11, 12) miteinander verbindenden Metallschichten (13, 14) sind durch Metallspritzen hergestellt.

2. Elektrischer Kondensator nach Anspruch 1, dadurch gekennzeichnet, dass die die Dielektrikumslagen (4, 5) bildenden Kunststoffolien 1 bis 15 μm dick sind.

3. Elektrischer Kondensator nach Anspruch 1 od. 2, dadurch gekennzeichnet, dass die Dielektrikumslagen (4, 5) im Bereich der oberen Schmalseite (29) des Stapels (1) metallfreie Streifen (30, 31) aufweisen.

4. Elektrischer Kondensator nach einem der Ansprüche 1, 2 oder 3, dadurch gekennzeichnet, dass an den Metallschichten (13, 14) Stromzuführungsdrähte (24, 25) befestigt sind, die sich in Richtung der Längsachse (26) des Stapels (1) erstrecken.

5. Elektrischer Kondensator nach einem der Ansprüche 1, 2 oder 3, dadurch gekennzeichnet, dass für den Einbau des Kondensators in Chipbauweise an den Metallschichten (13 oder 14) Stromzuführungen (32 oder 33) aus lötfähigem Metall befestigt sind, die gegebenenfalls kappenförmig ausgebildet sind und die aus den Vorsprüngen (8 bzw. 9) im verfestigten Stapel (1) gebildeten Füsse umschliessen.

6. Elektrischer Kondensator nach einem der Ansprüche 1 bis 5, dadurch gekennzeichnet, dass seine Kapazität durch die Tiefe (17) des Einschnittes (10) auf einem gewünschten, eng tolerierten Wert abgeglichen ist.

7. Elektrischer Kondensator nach einem der Ansprüche 1 bis 6, dadurch gekennzeichnet, dass er aus zwei Einzelkondensatoren (68, 69) besteht, wobei die eine Längsseite (27) des ersten Kondensators (68) mit der anderen Längsseite (28) des zweiten Kondensators (69) zusammenhängt, indem bei der Herstellung eine Trennung dort nicht erfolgt ist.

8. Verfahren zur Herstellung elektrischer Kondensatoren nach einem der Ansprüche 1 bis 7, bei dem einseitig metallisierte Bänder aus Kunststoff als Dielektrikumslagen, insbesondere mit randseitigem Wellenschnitt, auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils einen Mutterkondensator bildender Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen und danach im Bereich der Zwischenlagen und in dazu senkrechter Richtung geteilt wird, gekennzeichnet durch die Verfahrensschritte

a) es werden metallisierte Bänder (34, 35) auf die Trommel gewickelt, die je an einem Rand (36, 37) gegebenenfalls durchgehende metallfreie Streifen (30, 31) aufweisen, während in den Bereichen der gegenüberliegenden Ränder (38, 39) und in Abständen (40, 41) hierzu in Wickelrichtung (46) intermittierende metallfreie Isolierstreifen (42 bzw. 43) vor oder bei dem Aufwickeln derart erzeugt werden, dass die Isolierstreifen (42, 43) beim Aufwickeln auf die Trommel in einer Ebene senkrecht zur Wickelachse liegen und sowohl die Enden (47, 48) als auch die Anfänge (49, 50) der Isolierstreifen (42, 43) bis in den Bereich des späteren Einschnittes (10) hineinragen oder diesen Bereich geringfügig überschreiten,

b) die Bänder (34, 35) werden beim Aufwickeln auf die Trommel so geführt, dass die Mitten der Isolierstreifen (42) des oberen Bandes (34) symmetrisch über die Mitten der Zwischenräume (45) zwischen den Isolierstreifen (43) des unteren Bandes (35) gelangen,

c) nach dem Aufwickeln und Verfestigen der Ausgangskondensatoren bzw. Mutterkondensatoren wird noch auf der Trommel zumindest die aus den Rändern (38, 39) gebildete Stirnfläche (53) durch Metallspritzen mit einer Metallschicht (54) versehen,

d) nach dem Auftrennen in einzelne Mutterkondensatoren werden senkrecht zur Wickelrichtung (46) in der Mitte zwischen je zwei Schneidlinien (57) Einschnitte (10) erzeugt, durch deren Breite und Tiefe (17) die beiden Vorsprünge (8, 9) entstehen,

e) Abtrennen der einzelnen Kondensatoren, gegebenenfalls nach Befestigen von Stromzuführungen (24, 25, 32), durch Sägen längs von Schneidlinien (57), die durch die Mitten der Isolierstreifen (42, 43) gehen,

f) Fertigstellung der Kondensatoren durch Anbringen von kappenförmigen Stromzuführungen (33) oder von anderen Stromzuführungen (24, 25, 32), sofern diese nicht schon im Verfahrensschritt e) befestigt wurden.

9. Verfahren nach Anspruch 8, dadurch gekennzeichnet, dass beim Verfahrensschritt a) die auf die Trommel aufzuwickelnden Bänder (58, 59) an beiden Rändern (60, 61) mit den intermittierenden metallfreien Isolierstreifen (42, 43) versehen werden, dass beim Verfahrensschritt c) beide aus den Rändern (60, 61) gebildeten Stirnflächen (62, 63) mit Metallschichten (64, 65) durch Metallspritzen versehen werden, dass im Verfahrensschritt d) die Einschnitte (10) von beiden Seiten des Mutterkondensators erzeugt werden und dass im Verfahrensschritt e) die Abtrennung der einzelnen Kondensatoren sowohl längs der genannten Schneidlinien (57) als auch längs einer Schneidline (66) erfolgt, die parallel zu den Rändern (60, 61) in der Mitte des Mutterkondensators liegt.

10. Verfahren nach Anspruch 9, dadurch gekennzeichnet, dass die aufzuwickelnden metallisierten Bänder (58, 59) in ihrer Mitte mit durchgehenden metallfreien Streifen (67) versehen sind.

11. Verfahren nach einem der Ansprüche 8, 9 oder 10, dadurch gekennzeichnet, dass die Herstellung der intermittierenden metallfreien Isolierstreifen (42 bzw. 43) auf den Bändern (34 bzw. 35, 58 bzw. 59) durch Anwendung von Laserstrahlen oder durch Einsatz von Abbrennrädern erfolgt, wobei zur Erzielung der gewünschten Lage und Länge der Isolierstreifen (42 bzw. 43) zueinander und auch in bezug auf den Aufbau der Mutterkondensatoren bei zunehmendem Radius die Laserimpulse bzw. die Abbrenntakte der Abbrennräder synchron mit der Drehung der Trommel gesteuert werden.

## Claims

1. An electrical capacitor consisting of an integral pile (1) of stacked dielectric sheets (4, 5) which are in each case provided with a metal layer as a coating (2, 3), in which the coatings (2, 3) extend alternately from sheet to sheet to the ends (6, 7) of two projections (8, 9) formed by a slot (10) which extends in the direction of the thickness of the pile (1) and approximately in the centre of the one side thereof, and in with the surfaces (11, 12) formed by the ends (6, 7) of the projections (8, 9) in the integral pile (1), are provided with metal layers (13, 14) which serve for contacting and which connect the oppositely poled coatings (2, 3) to one another, characterised by the following features:

a) the dielectric sheets (4, 5) consist of synthetic resin films;

b) the coatings (2, 3) consist of regenerably thin layers made of a metal exhibiting the valve effect and in each case cover a surface of the dielectric sheets (4, 5) virtually to the edges at the longitudinal sides (27, 28) and to the two ends (6, 7) of the projections (8, 9) and possibly to the edge of the upper narrow side (29) of the pile (1) which is opposite the narrow side containing the slot (10);

c) the projections (8, 9) are provided alternately from dielectric sheet (4) to dielectric sheet (5) with metal-free insulating strips (15 or 16), the depth (17) of the slot (10) being either greater than the width (18 or 19) of the residual metal strip (20 or 21), or preferably coincides with the inner edges (55, 56) of the insulating strips (15, 16) or extends beyond the edges (55, 56) into the pile (1);

d) the metal layers (13, 14) which connect the oppositely poled coatings (2, 3) on the surfaces (11, 12) to one another, are poroduced by metal spraying.

2. An electrical capacitor as claimed in claim 1, characterised in that the synthetic resin films forming the dielectric sheets (4, 5) have a thickness of from 1 to 15 μm.

3. An electrical capacitor as claimed in claim 1 or claim 2, characterised in that in the region of the upper narrow side (29) of the pile (1), the dielectric sheets (4, 5) have metal-free strips (30, 31).

4. An electrical capacitor as claimed in one of claims 1, 2 or 3, characterised in that current supply wires (24, 25) which extend in the direction of the longitudinal axis (26) of the pile (1), are fastened to the metal layers (13, 14).

5. An electrical capacitor as claimed in one of claims 1, 2 or 3, characterised in that for installing the capacitor in a chip construction, current supply lines (32 or 33) made of a solderable metal are fastened to the metal layers (13 or 14), which current supply lines are if necessary cap-shaped and surround the bases formed from the projections (8 or 9) in the integral pile (1).

6. An electrical capacitor as claimed in one of claims 1 to 5, characterised in that its capacitance is adjusted with a narrow tolerance to a required value by the depth (17) of the slot (10).

7. An electrical capacitor as claimed in one of claims 1 to 6, characterised in that it consists of two individual capacitors (68, 69) where the one longitudinal side (27) of the first capacitor (68) is coincident with the other longitudinal side (28) of the second capacitor (69), and where a separation is not carried out during production.

8. A method of producing electrical capacitors as claimed in one of claims 1 to 7, in which tapes made of a synthetic resin and metallized on one side are arranged on a drum in layers as dielectric sheets, in particular with a wavy edge, to form a starting capacitor and the starting capacitor is divided into the required individual capacitors at right angles to the planes of the layers, where capacitively inactive intermediate layers are if necessary arranged on a number of dielectric sheets, forming in each case a parent capacitor, and on these intermediate layers the capacitively active dielectric sheets having the coatings for the next master capacitor are arranged, and the starting capacitor so formed is provided with end contact layers and is subsequently divided up in the region of the intermediate layers and in a direction at right angles thereto, characterised by the process steps:

a) metallized tapes (34, 35) are wound onto the drum, the tapes in each case having metal-free strips (30, 31) at an edge (36, 37), which strips are continuous if required, whilst in the regions of the opposite edges (38, 39) and spaced distances (40, 41) therefrom unmetallised insulating strips (42 and 43) which are intermittently arranged in the winding direction (46) are produced prior to or during the winding operation in such manner that when the insulating strips (42, 43) are wound onto the drum are arranged in a plane at right angles to the winding axis and both the ends (47, 48) and also the beginnings (49, 50) of the insulating strips (42, 43) project into the region of the future slot (10), or extend beyond this region to a negligeable extent;

b) the tapes (34, 35) are guided when wound onto the drum in such manner that the centres of the insulating strips (42) of the upper tape (34) are symmetrically arranged above the centres of the interspaces (45) between the insulating strips (43) of the lower tape (35);

c) after the winding and consolidation of the starting capacitors or parent capacitors as the case may be, at least the end surface (53) formed by the edges (38, 39) is provided still on the drum with a metal layer (54) by metal spraying;

d) after the division into individual master capacitors, slots (10) are produced at right angles to the winding direction (46) in the centre between two cutting lines (57), by the width and depth (17) of which slots the two projections (8, 9) are formed;

e) separation of the individual capacitors, if necessary after the fixing of current supply lines (24, 25, 32), by sawing along cutting lines (57) wich extend through the centres of the insulating strips (42, 43);

f) completion of the capacitors by attaching cap-shaped current supply lines (33), or other current supply lines (24, 25, 32), if they have not already been fixed in process step e).

9. A method as claimed in claim 8, characterised in that in process step a), the tapes (58, 59) which are to be wound onto the drum, are provided with the intermittent metal-free insulating strips (42, 43) at both edges (60, 61); that in process step c), both end faces (62, 63) formed by the edges (60, 61), are provided with metal layers (64, 65) by metal spraying; that in process step d), the slots (10) are produced from both sides of the parent capacitor; and that in process step e), the separation of the individual capacitors is carried out both along said cutting lines (57) and also along a cutting line (66) which is arranged parallel to the edges (60, 61) in the centre of the parent capacitor.

10. A method as claimed in claim 9, characterised in that the metallized tapes (58, 59) to be wound are provided with continuous metal-free strips (67) in their centre.

11. A method as claimed in one of claims 8, 9 or 10, characterised in that the production of the intermittent metal-free insulating strips (42 and 43) on the tapes (34 and 35, 58 and 59) is carried out using laser beams or by the insertion of burn-off wheels, where in order to obtain the required position and length for the insulating strips (42 or 43) to one another and also having regard to the forming of the parent capacitors with increasing radius, the laser pulses, or the burn-off clock pulses of the burn-off wheels, as the case may be, are controlled in synchronism with the rotation of the drum.

**Revendications**

1. Condensateur électrique consitué par une pile consolidée (1) de couches superposées de diélectrique (4, 5), qui sont équipées chacune d'une couche métallique formant armature (2, 3), et dans lequel les armatures (2, 3) s'étendent, et ce en alternance d'une couche à l'autre, jusqu'aux extrémités (6, 7) de deux éléments saillants (8, 9) qui sont formées par la présence d'une découpe (10) et qui d'étendent suivant la direction de l'épaisseur de la pile (1) en étant situés approximativement au milieu d'un côté, et dans lequel en outre les surfaces (11, 12) formées par les extrémités (6, 7) des éléments saillants (8, 9) dans la pile consolidée (1) sont équipées de couches métalliques (13, 14) servant à l'établissement de contacts et qui relient entre elles les armatures (2, 3) possédant des polarités opposées, caractérisé par les caractéristiques suivantes:

a) les couches de diélectrique (4, 5) sont constituées par des feuilles de matière plastique,

b) les armatures (2, 3) sont constituées par des couches minces régénérables réalisées en un métal pour valves et recouvrent chacune une surface des couches de diélectrique (4, 5), et ce pratiquement jusqu'aux bords au niveau des grands côtés (27, 28) ainsi que jusqu'aux extrémités (6, 7) des éléments saillants (8, 9) et éventuellement jusqu'au bord du petit côté supérieur (29) de la pile (1), qui est situé à l'opposé du petit côté comportant la découpe (10),

c) les éléments saillants (8, 9) sont pourvus, d'une manière alternée, d'une couche de diélectrique (4) à l'autre couche de diélectrique (5), de bandes isolantes (15 ou 16) exemptes de métal, auquel cas soit la profondeur (17) de la découpe (10) est supérieure à la largeur (18 ou 19) de la bande métallique résiduelle (20 ou 21), soit s'étend de préférence jusqu'aux bords intérieurs (55, 56) des bandes isolantes (15, 16), soit s'étend au-delà de ces bords (55, 56) dans la pile (1),

d) les couches métalliques (13, 14) qui relient entre elles les armatures (2, 3) possédant des polarités opposées, au niveau des surfaces (11, 12), sont réalisées par projection de métal.

2. Condensateur électrique suivant la revendication 1, caractérisé par le fait que les feuilles de matière plastique qui constituent les couches de diélectrique (4, 5) possèdent une épaisseur comprise entre 1 et 15 µm.

3. Condensateur électrique suivant la revendication 1 ou 2, caractérisé par le fait que les couches de diélectrique (4, 5) comportent des bandes (30, 31) exemptes de métal, au voisinage du petit côté supérieur (29) de la pile (1).

4. Condensateur électrique suivant les revendications 1, 2 ou 3, caractérisé par le fait que sur les couches métalliques (13, 14) se trouvent fixées des fils d'alimentation en courant (24, 25), qui d'étendent suivant la direction de l'axe longitudinal (26) de la pile (1).

5. Condensateur électrique suivant l'une des revendications 1, 2 ou 3, caractérisé par le fait que pour le montage du condensateur sur une microplaquette, aux couches métalliques (13 ou 14) se trouvent fixées des organes d'alimentation en courant (32 ou 33) constitués en un métal soudable et qui réalisés éventuellement sous la forme de capuchons et enserrent les pieds formés par les éléments saillants (8 ou 9) de la pile consolidée (1).

6. Condensateur électrique suivant l'une des revendications 1 à 5, caractérisé par le fait que sa capacité est réglée, au moyen de la profondeur (17) de la découpe (10), à une valeur désirée, pour laquelle les tolérances sont serrées.

7. Condensateur électrique suivant l'une des revendications 1 à 6, caractérisé par le fait qu'il est constitué par deux condensateurs individuels (68, 69), un grand côté (27) du premier condensateur (68) étant réuni à l'autre grand côté (28) du second condensateur (69), par le fait qu'aucune séparation n'est réalisée en cet endroit lors de la fabrication.

8. Procédé pour fabriquer des condensateurs électriques suivant l'une des revendications 1 à 7, selon lequel on dépose des rubans de matière plastique, dont une face est métallisée et qui servent de couches de diélectrique et possèdent notamment des bords coupés avec une forme ondulée, sur un tambour de manière à former un condensateur de départ et qu'on subdivise le condensateur de départ perpendiculairement aux plans des couches, pour obtenir les condensateurs individuels désirés, auquel cas on dispose, sur un certain nombre de couches de diélectrique et d'armatures, constituant un condensateur mère, des couches intercalaires n'ayant aucune action capacitive et, à nouveau sur ces couches, les couches de diélectrique ayant une action capacitive et munies des armatures servant à former le condensateur mère immédiatement suivant, et on appose, sur le condensateur de départ ainsi obtenu, des couches servant à établir des contacts frontaux et on subdivise ensuite ce condensateur au niveau des couches intercalaires et suivant une direction perpendiculaire à ces couches, caractérisé par les phases opératoires suivantes:

a) on enroule sur le tambour des rubans métallisés (34, 35) qui comportent éventuellement, au niveau de bords respectifs (36, 37), des bandes continues (30, 31) exemptes de métal, tandis qu'on forme, avant ou lors de l'enroulement, des bandes isolantes (42 ou 43) exemptes de métal, présentes de façon intermittente dans la direction d'enroulement (46) en étant situées dans des zones des bords opposés (38, 39) et à des distances (40, 41) de ces bords, par le fait que lors de l'enroulement sur le tambour, les bandes isolantes (42, 43) sont situées dans un plan perpendiculaire à l'axe de l'enroulement et qu'aussi bien les extrémités (47, 48) que les départs (49, 50) des bandes isolantes (42, 43) pénètrent jusque dans la zone de la découpe formée ultérieurement (10) ou s'étendent légèrement au-delà de cette zone,

b) on guide les rubans (34, 35), lors de l'enroulement sur le tambour, de manière que les centres des bandes isolantes (42) du ruban supérieur (34) soient disposés symétriquement par rapport aux centres des espaces intercalaires (45) présents entre les bandes isolantes (43) du bras inférieur (35),

c) après l'enroulement et la consolidation des condensateurs de sortie ou des condensateurs mères, on appose en outre au moins sur la surface frontale (53) du tambour, formée par les bords (38, 39), une couche métallique (54) par projection de métal,

d) après la séparation en condensateurs mères individuels, on aménage, perpendiculairement à la direction d'enroulement (6), à mi-chemin entre deux lignes de coupe respectives (57), des découpes (10), dont la largeur et la profondeur (17) sont telles qu'elles délimitent les deux éléments saillants (8, 9),

e) séparation des différents condensateurs, éventuellement après fixation d'organes d'alimentation en énergie (24, 25, 32), par sciage le long de lignes de coupe (57), qui passent par les axes des bandes isolantes (42, 43),

f) achèvement de la fabrication des condensateurs par mise en place d'organes d'alimentation en courant en forme de capuchons (33) ou d'autres organes d'alimentation en courant (24, 25, 32), dans la mesure où ces derniers n'ont pas déjà été fixés lors de la phase opératoire e).

9. Procédé suivant la revendication 8, caractérisé par le fait que lors de la phase opératoire a), on applique sur les deux bords (60, 61) des rubans (58, 59) devant être enroulés sur le tambour, les bandes isolantes (42, 43) intermittentes, exemptes de métal, que lors de la phase opératoire c), on appose, sur les deux faces frontales (62, 63) formées par les bords (60, 61), des couches métalliques (64, 65) par projection de métal, que lors de la phase opératoire d), on réalise les découpes (10) des deux côtés du condensateur mère, et que lors de la phase opératoire e), on réalise la séparation des différents condensateurs aussi bien le long desdites lignes de coupe (57) que le long d'une ligne de coupe (66) qui est parallèle aux bords (60, 61) et se situe au centre du condensateur mère.

10. Procédé suivant la revendication 9, caractérisé par le fait que l'on dispose des bandes continues (67) exemptes de métal dans la partie médiane des rubans métallisés (58, 59) devant être enroulés.

11. Procédé suivant l'une des revendications 8, 9 ou 10, caractérisé par le fait que la fabrication des bandes isolantes intermittentes (42 ou 43) exemptes de métal, sur le ruban (34 ou 35, 58 ou 59) s'effectue par application de faisceaux laser ou bien grâce à l'utilisation de disques de brûlage, auquel cas, pour l'obtention de la position mutuelle, et de la longueur des bandes isolantes (42 ou 43) et également en rapport avec la construction du condensateur mère, lorsque le rayon augmente, on commande les impulsions laser ou la cadence de brûlage des disques de brûlage en synchronisme avec la rotation du tambour.

FIG 1

FIG 2

FIG 3

FIG 4

FIG 5

# FIG 6

# FIG 7

# FIG 8

# FIG 9